# EUROPÄISCHE PATENTSCHRIFT

(11) **EP 3 303 951 B1**
(45) Veröffentlichungstag und Bekanntmachung des Hinweises auf die Patenterteilung: **16.12.2020**
(21) Anmeldenummer: 16721829.6
(22) Anmeldetag: 12.05.2016
(51) Int. Cl.: F25B 49/02, F25D 29/00

(54) **KÄLTEGERÄT MIT EINEM KÄLTEMITTELVERDICHTER**
REFRIGERATION APPLIANCE WITH A REFRIGERANT COMPRESSOR
APPAREIL DE FROID COMPRENANT UN COMPRESSEUR FRIGORIFIQUE

(30) Priorität: 02.06.2015 DE 102015210109
(43) Veröffentlichungstag der Anmeldung: 11.04.2018
(73) Patentinhaber: BSH Hausgeräte GmbH, 81739 München (DE)
(72) Erfinder: MALANDRIN, Daniel, 89537 Giengen (DE)
(86) Internationale Anmeldenummer: PCT/EP2016/060669
(87) Internationale Veröffentlichungsnummer: WO 2016/192949

(56) Entgegenhaltungen:
- EP-A1- 2 172 725
- EP-A1- 2 189 739
- DE-A1-102010 043 249
- DE-A1-102012 211 270

## Beschreibung

Die vorliegende Erfindung betrifft ein Kältegerät mit einem Kältemittelverdichter.

In Kältegeräten wird die Kühlleistung von Kältemittelkreisläufen durch eine Änderung der Drehzahl des Kältemittelverdichters gesteuert. Bei einem Temperaturanstieg in dem Kältegeräteinnenraum des Kältegeräts, beispielsweise durch ein Öffnen der Kältegerätetür, kann die Drehzahl des Kältemittelverdichters erhöht werden, um die Kühlleistung des Kältemittelkreislaufs zu erhöhen.

In EP 0 859 208 A2 ist ein Kühlschrank mit einem Kühlsystem beschrieben, welches einen Kältemittelverdichter umfasst, der mit einer variablen Drehzahl betrieben wird. In einer Kältekammer des Kühlschranks ist ein Temperaturmessgerät angeordnet, welches ausgebildet ist, die Drehzahl des Kältemittelverdichters zu regulieren.

In der WO 03/025480 A1 ist ein Kontrollverfahren für einen Kühlschrank mit einem Temperatursensor in einem Kühlbereich und mit einem Kältemittelverdichter in einem Kühlsystem offenbart. Nach dem Kontrollverfahren wird die Drehzahl des Kältemittelverdichters in Abhängigkeit von der Temperatur in dem Kühlbereich und in Abhängigkeit von der Position eines Umlenkbleches in dem Kühlbereich reguliert.

In der DE 10 2010 043 249 A1 ist ein Kältegerät mit einem von einem Verdichter angetrieben Kältemittelkreislauf zum Kühlen einer Lagerkammer offenbart.

In der DE 10 2012 211 270 A1 ist ein Kältegerät mit einem Kühlkreislauf mit einem Verdichter zum Kühlen von Kühlfächern offenbart.

In der EP 2 189 739 A1 ist ein Kompressor in einem Kühlgerät offenbart.

In der EP 2 172 725 A1 ist eine Kühlleistungssteuerung in einem Kühlgerät offenbart.

Es ist die der Erfindung zugrundeliegende Aufgabe, ein Kältegerät anzugeben, bei dem ein wirksames Steuern des Kältemittelverdichters erreicht wird.

Diese Aufgabe wird durch einen Gegenstand mit den Merkmalen nach den unabhängigen Ansprüchen gelöst. Vorteilhafte Ausführungsformen sind Gegenstand der abhängigen Ansprüche, der Beschreibung und der Zeichnungen.

Dadurch wird der technische Vorteil erreicht, dass die Kühlleistung des Kältemittelkreislaufes durch das Erhöhen, bzw. Erniedrigen der Drehzahl des elektrischen Antriebs des Kältemittelverdichters an die erfasste Temperatur in dem Kältegeräteinnenraum und damit an die tatsächlich benötigte Kühlleistung vorteilhaft und zeitnah angepasst werden kann.

Wenn die Kältegerätetür des Kältegeräts durch den Nutzer geöffnet wird, z.B. um neues Kühlgut in das Kältegerät einzubringen, kommt es meist zu einem starken Temperaturanstieg in dem Kältegeräteinnenraum. In herkömmlichen Kältegeräten wird die durch den Temperaturanstieg zusätzlich benötigte Kühlleistung des Kältemittelkreislaufs durch eine verlängerte Laufzeit des Kältemittelverdichters bereitgestellt. Bei einer stark erhöhten Temperatur in dem Kältegeräteinnenraum muss der Kältemittelverdichter für eine lange Laufzeit betrieben werden, damit die Temperatur in dem Kältegeräteinnenraum wieder der gewünschten Temperatur entspricht.

In dem erfindungsgemäßen Kältegerät ist die Steuerung mit dem Temperatursensor verbunden und verfügt damit über die erfasste Temperatur in dem Kältegeräteinnenraum. Somit kann die Steuerung die Drehzahl des elektrischen Antriebs des Kältemittelverdichters in Abhängigkeit von dem durch den Temperatursensor erfassten Temperaturwert direkt steuern. Wenn die erfasste Temperatur über dem Temperaturschwellwert liegt, wird die aktuelle Drehzahl des elektrischen Antriebs um einen vorbestimmten Drehzahlwert erhöht, um die Kühlleistung des Kältemittelverdichters zu erhöhen. Wenn die erfasste Temperatur unter dem Temperaturschwellwert liegt, wird die aktuelle Drehzahl des elektrischen Antriebs um einen vorbestimmten Drehzahlwert erniedrigt, um die Kühlleistung des Kältemittelverdichters zu erniedrigen.

Nach dem Erhöhen, bzw. Erniedrigen der aktuellen Drehzahl des elektrischen Antriebs um den vorbestimmten Drehzahlwert wird eine neue aktuelle Drehzahl des elektrischen Antriebs erhalten. Dadurch wird erreicht, dass bei einem Anstieg der Temperatur in dem Kältegeräteinnenraum über den Temperaturschwellwert eine besonders vorteilhafte und intensive Kühlleistung des Kältemittelverdichters zeitnah zur Verfügung steht. Dadurch kann die Temperatur rasch wieder gesenkt werden, wodurch ein Verderben von empfindlichem Kühlgut in dem Kältegerät ausgeschlossen werden kann. Darüber hinaus ist eine solche zeitnah aktivierbare vorteilhafte Kühlleistung des Kältemittelverdichters insbesondere an Aufstellorten mit hohen Temperaturen, wie z.B. in Ländern mit tropischen Temperaturen, von Vorteil.

Unter einem Kältegerät wird insbesondere ein Haushaltskältegerät verstanden, also ein Kältegerät, das zur Haushaltsführung in Haushalten oder im Gastronomiebereich eingesetzt wird, und insbesondere dazu dient Lebensmittel und/oder Getränke bei bestimmten Temperaturen zu lagern, wie beispielsweise ein Kühlschrank, ein Gefrierschrank, eine Kühlgefrierkombination, eine Gefriertruhe oder ein Weinkühlschrank.

In einer vorteilhaften Ausführungsform des Kältegeräts ist die Steuerung ausgebildet, die erfasste Temperatur mit dem Temperaturschwellwert zu vergleichen, um das Überschreiten oder Unterschreiten des Temperaturschwellwertes durch die erfasste Temperatur zu erfassen.

Dadurch wird der technische Vorteil erreicht, dass das Überschreiten, bzw. Unterschreiten des Temperaturschwellwertes durch die erfasste Temperatur durch die Steuerung effizient und zeitnah erfasst werden kann, wodurch ein schnelles Erhöhen, bzw. Erniedrigen der Drehzahl des elektrischen Antriebs erreicht werden kann.

Nach der vorliegenden Erfindung ist die Steuerung des Kältegeräts ausgebildet, bei Überschreiten eines weiteren Temperaturschwellwertes durch die erfasste Temperatur die aktuelle Drehzahl des elektrischen Antriebs um einen vorbestimmten weiteren Drehzahlwert darüber hinaus zusätzlich zu dem vorbestimmten ersten Drehzahlwert zu erhöhen, wobei der weitere Temperaturschwellwert größer als der Temperaturschwellwert ist, und wobei der vorbestimmte weitere Drehzahlwert größer als der vorbestimmte Drehzahlwert ist.

Dadurch kann bei einem außergewöhnlich starken Temperaturanstieg in dem Kältegeräteinnenraum eine besonders starke Kühlleistung des Kältemittelverdichters bereitgestellt werden.

In einer vorteilhaften Ausführungsform des Kältegeräts ist die Steuerung ausgebildet, die aktuelle Drehzahl des elektrischen Antriebs stufenweise zu erhöhen oder zu erniedrigen.

Dadurch wird der technische Vorteil erreicht, dass die Drehzahl des elektrischen Antriebs effizient eingestellt werden kann. Durch das stufenweise Erhöhen, bzw. Erniedrigen, der aktuellen Drehzahl des elektrischen Antriebs kann vermieden werden, dass sofort eine maximale Erhöhung, bzw. Erniedrigung der aktuellen Drehzahl vorgenommen wird, die möglicherweise nicht benötigt wird. Dadurch kann die Anzahl der Erhöhungen, bzw. Erniedrigungen der Drehzahl reduziert werden, wodurch ein energiesparender Betrieb des elektrischen Antriebs ermöglicht wird.

In einer vorteilhaften Ausführungsform des Kältegeräts ist die Steuerung ausgebildet, bei Erreichen einer Nominaldrehzahl des elektrischen Antriebs des Kältemittelverdichters die Drehzahl des elektrischen Antriebs konstant zu halten.

Dadurch wird der technische Vorteil erreicht, dass die Nominaldrehzahl die Drehzahl des elektrischen Antriebs des Kältemittelverdichters bestimmt, bei der ein besonders wirksamer und energieeffizienter Betrieb des elektrischen Antriebs des Kältemittelverdichters ermöglicht wird. Die Nominaldrehzahl kann vorbestimmt oder von einem Hersteller des Kältemittelverdichters vorgegeben sein. Beispielsweise beträgt die Nominaldrehzahl 1000 U/min, 1500 U/min, 2000 U/min, 2500 U/min, 3000 U/min, 3500 U/min, 4000 U/min, 4500 U/min, 5000 U/min, 5500 U/min oder 6000 U/min.

In einer vorteilhaften Ausführungsform des Kältegeräts beträgt der vorbestimmte Drehzahlwert zwischen 300 Umdrehungen pro Minute und 600 Umdrehungen pro Minute, insbesondere etwa 450 Umdrehungen pro Minute oder beträgt der vorbestimmte weitere Drehzahlwert zwischen 1200 Umdrehungen pro Minute und 1800 Umdrehungen pro Minute, insbesondere etwa 1450 Umdrehungen pro Minute.

Dadurch wird der technische Vorteil erreicht, dass durch die jeweiligen vorbestimmten Drehzahlwerte eine besonders vorteilhafte Anpassung der aktuellen Drehzahl des elektrischen Antriebs an die wirklich benötigte Drehzahl ermöglicht wird. Da der vorbestimmte weitere Drehzahlwert größer als der vorbestimmte Drehzahlwert ist, führt eine Erhöhung der aktuellen Drehzahl des elektrischen Antriebs um den vorbestimmten weiteren Drehzahlwert zu einer besonders wirkungsvollen Kühlung durch den Kältemittelverdichter.

In einer vorteilhaften Ausführungsform des Kältegeräts ist die Steuerung ausgebildet, bei einer Inbetriebnahme des Kältemittelverdichters die Drehzahl des elektrischen Antriebs kontinuierlich auf eine initiale Drehzahl zu erhöhen.

Dadurch wird der technische Vorteil erreicht, dass bei der Inbetriebnahme des Kältegeräts die initiale Drehzahl des elektrischen Antriebs ausreichend ist, um bei geschlossener Kältegerätetür des Kältegeräts eine ausreichende Kühlung des Kältegeräteinnenraums sicherzustellen.

In einer vorteilhaften Ausführungsform des Kältegeräts ist die Steuerung ausgebildet nach dem Erhöhen oder Erniedrigen der aktuellen Drehzahl des elektrischen Antriebs um den jeweiligen vorbestimmten Drehzahlwert die anschließend erhaltene Drehzahl als eine aktuelle Drehzahl in einem Speicher zu speichern.

Dadurch wird der technische Vorteil erreicht, dass der Steuerung die neue aktuelle Drehzahl nach dem Erhöhen oder Erniedrigen der aktuellen Drehzahl zu Verfügung steht.

In einer vorteilhaften Ausführungsform des Kältegeräts umfasst das Kältegerät eine Eingabeeinrichtung zur Eingabe des jeweiligen Temperaturschwellwerts.

Dadurch wird der technische Vorteil erreicht, dass der Nutzer den jeweiligen Temperaturschwellwert individuell festlegen kann, wodurch die Temperatur in dem Kältegeräteinnenraum an verschiedenes Kühlgut angepasst werden kann.

In einer vorteilhaften Ausführungsform des Kältegeräts weist das Kältegerät einen Speicher zur Bereitstellung des jeweiligen Temperaturschwellwerts oder eine Kommunikationsschnittstelle zum Abrufen des jeweiligen Temperaturschwellwerts über ein Kommunikationsnetzwerk auf.

Dadurch wird der technische Vorteil erreicht, dass ein Speicher ermöglicht eine Vielzahl von Temperaturschwellwerten in Abhängigkeit von verschiedenem Kühlgut zu speichern. Die Kommunikationsschnittstelle bietet den Vorteil, dass die Temperaturschwellwerte über ein Kommunikationsnetzwerk, wie z.B. dem Internet, erlangt werden können. Dadurch kann ein Großteil der Temperaturschwellwerte dezentral, z.B. auf einem Server, gespeichert werden.

In einer vorteilhaften Ausführungsform des Kältegeräts ist das Kommunikationsnetzwerk eines der folgenden Kommunikationsnetzwerke: GSM-Kommunikationsnetzwerk, UMTS-Kommunikationsnetzwerk, Wireless-LAN-Kommunikationsnetzwerk, Bluetooth-Kommunikationsnetzwerk oder Ethernet-Kommunikationsnetzwerk.

Dadurch wird der technische Vorteil erreicht, dass durch die genannten Kommunikationsnetzwerke eine schnelle Kommunikationsverbindung zwischen dem Speicher und dem Kommunikationsnetzwerk hergestellt werden kann, wodurch die Temperaturschwellwerte zeitnah der Steuerung zur Verfügung gestellt werden können.

Durch die vorliegende Erfindung wird der technische Vorteil erreicht, dass die Kühlleistung des Kältemittelkreislaufes durch die Erhöhung, bzw. Erniedrigung der aktuellen Drehzahl des elektrischen Antriebs des Kältemittelverdichters an die Temperatur in dem Kältegeräteinnenraum und damit an die benötigte Kühlleistung angepasst werden kann.

Es wird auch der technische Vorteil erreicht, dass bei Überschreiten des weiteren Temperaturschwellwerts durch die erfasste Temperatur in dem Kältegeräteinnenraum und einer Erhöhung der aktuellen Drehzahl des elektrischen Antriebs um den vorbestimmten weiteren Drehzahlwert eine besonders wirkungsvolle und vorteilhafte Kühlleistung des Kältemittelverdichters bereitgestellt werden kann.

Weitere Ausführungsbeispiele werden Bezug nehmend auf die beiliegenden Zeichnungen erläutert. Es zeigen:
Fig. 1 eine schematische Darstellung eines Kältegerätes;
Fig. 2 eine schematische Darstellung des Innenbereichs eines Kältegerätes;
Fig. 3 eine schematische Darstellung eines Kühlprozesses, die nicht ein Teil der vorliegende Erfindung ist;
Fig. 4 eine schematische Darstellung eines temperaturabhängigen Steuerprozesses eines Kältemittelverdichters nach der vorliegenden Erfindung;
Fig. 5 einen Ablauf eines Verfahrens zum Betreiben eines Kältegeräts, der nicht ein Teil der vorliegende Erfindung ist.

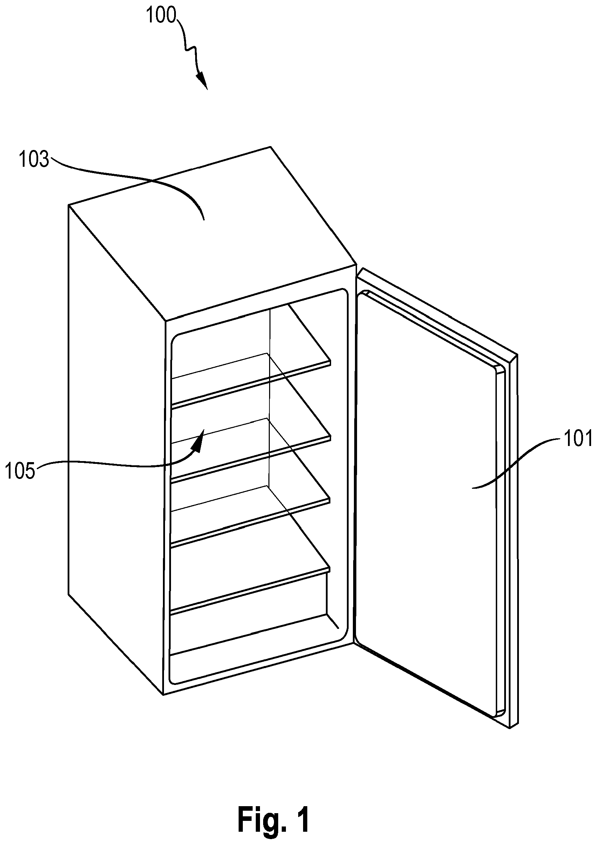

Fig. 1 zeigt einen Kühlschrank stellvertretend für ein allgemeines Kältegerät 100 mit einer Kältegerätetür 101, mit einem Kältegeräterahmen 103 und mit einem Kältegeräteinnenraum 105, welcher durch die Kältegerätetür 101 verschließbar ist.

Das Kältegerät 100 umfasst einen oder mehrere Kältemittelkreisläufe mit jeweils einem Verdampfer, Kältemittelverdichter, Verflüssiger und Drosselorgan. Der Verdampfer ist ein Wärmeaustauscher, in dem nach der Expansion das flüssige Kältemittel durch Wärmeaufnahme von dem zu kühlenden Medium, z.B. Luft, verdampft wird. Der Kältemittelverdichter ist ein mechanisch betriebenes Bauteil, das Kältemitteldampf vom Verdampfer absaugt und bei einem höheren Druck zum Verflüssiger ausstößt. Der Verflüssiger ist ein Wärmeaustauscher, in dem nach der Kompression das verdampfte Kältemittel durch Wärmeabgabe an ein äußeres Kühlmedium, z.B. Luft, verflüssigt wird. Dazu umfasst das Kältegerät 100 einen Ventilator, welcher ausgebildet ist, dem Verflüssiger einen Luftstrom zuzuführen. Durch den Luftstrom kommt es zu einer Abkühlung und zu einer wirksamen Wärmeabfuhr von dem Verflüssiger. Das Drosselorgan ist eine Vorrichtung zur ständigen Verminderung des Druckes durch Querschnittsverengung. Das Kältemittel ist ein Fluid, das für die Wärmeübertragung in dem Kältemittelkreislauf verwendet wird, das bei niedrigen Temperaturen und niedrigem Druck des Fluides Wärme aufnimmt und bei höherer Temperatur und höherem Druck des Fluides Wärme abgibt, wobei üblicherweise Zustandsänderungen des Fluides inbegriffen sind.

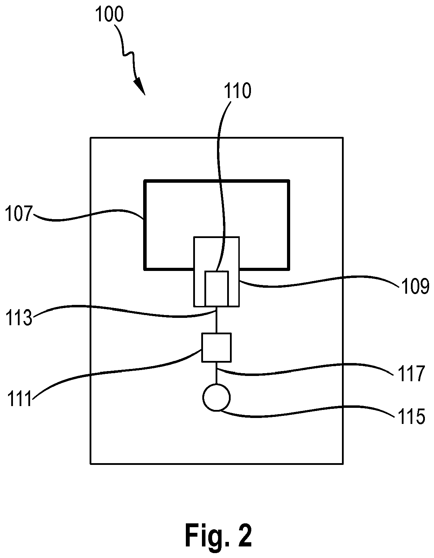

Fig. 2 zeigt eine schematische Darstellung des Innenbereichs eines Kältegeräts 100 mit einem Kältemittelkreislauf 107, welcher unter anderem einen Kältemittelverdichter 109 mit einem elektrischen Antrieb 110 umfasst. Das Kältegerät 100 umfasst ferner einen Temperatursensor 115 zum Erfassen der Temperatur in dem Kältegeräteinnenraum 105 des Kältegeräts 100, wobei die erfasste Temperatur durch eine Temperaturverbindung 117 an eine Steuerung 111 des Kältegeräts 100 übertragen wird. Die Steuerung 111 ist durch eine Steuerungsverbindung 113 mit dem Kältemittelverdichter 109 verbunden und ist ausgebildet eine Drehzahl des elektrischen Antriebs 110 des Kältemittelverdichters 109, insbesondere in Abhängigkeit von der erfassten Temperatur, zu steuern.

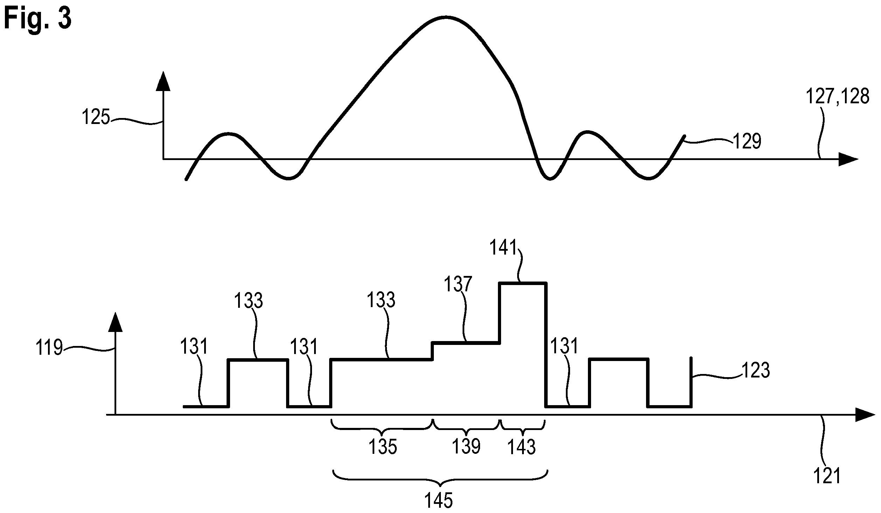

Fig. 3 zeigt eine schematische Darstellung eines Kühlprozesses, die nicht ein Teil der vorliegende Erfindung ist. Fig. 3 zeigt ein erstes Koordinatensystem in dem entlang der ersten Ordinatenachse 119 die Drehzahl des elektrischen Antriebs 110 des Kältemittelverdichters 109 angegeben ist und entlang der ersten Abszissenachse 121 die Zeit angetragen ist. In Fig. 3 ist ein zweites Koordinatensystem gezeigt, in dem entlang der zweiten Ordinatenachse 125 die Temperatur in dem Kältegeräteinnenraum 105 und entlang der zweiten Abszissenachse 127 ein konstanter Temperaturschwellwert 128 dargestellt ist. In dem zweiten Koordinatensystem ist eine Temperaturkurve 129 des Kältegeräteinnenraus 105 in Abhängigkeit von der Zeit dargestellt.

Wie in dem ersten Koordinatensystem dargestellt ist, betreibt die Steuerung 111 den elektrischen Antrieb 110 nach Inbetriebnahme des Kältemittelverdichters 109 mit einer geringen initialen Drehzahl 131, insbesondere zwischen 2000 und 2100 Umdrehungen pro Minute, wenn die Temperatur in dem Kältegeräteinnenraum 105 unter dem Temperaturschwellwert 128 liegt. Wenn die Temperatur in dem Kältegeräteinnenraum 105 den Temperaturschwellwert 128 überschreitet, erhöht die Steuerung 111 die Drehzahl des elektrischen Antriebs 110 auf eine erste Drehzahl 133. Sinkt die Temperatur in dem Kältegeräteinnenraum 105 wieder ab, so betreibt die Steuerung 111 den elektrischen Antrieb 110 wieder mit der initialen Drehzahl 131.

Wenn die Kältegerätetür 101 des Kältegeräts 100 geöffnet wird, um beispielweise neues Kühlgut in das Kältegerät 100 einzubringen, steigt die Temperatur in dem Kältegeräteinnenraum 105 an, und die Steuerung 111 erhöht die Drehzahl des elektrischen Antriebs 110 für einen ersten Zeitraum 135 auf die erste Drehzahl 133. Nach dem ersten Zeitraum 135 wird die Drehzahl des elektrischen Antriebs 110 für einen zweiten Zeitraum 139 auf eine Zwischendrehzahl 137 erhöht. Nach dem zweiten Zeitraum 139 wird die Drehzahl des elektrischen Antriebs 110 für einen dritten Zeitraum 143 auf eine zweite Drehzahl 141 erhöht. Nach dem Ende des dritten Zeitraums 143 ist die Temperatur in dem Kältegeräteinnenraum 105 wieder auf den Temperaturschwellwert 128 gesunken und die Steuerung 111 reduziert die Drehzahl des elektrischen Antriebs 110 wieder auf die initiale Drehzahl 131.

In dem in Figur 3 dargestellten Kühlprozess, der nicht ein Teil der vorliegende Erfindung ist, wird die Kühlwirkung des Kältemittelverdichters 109 anhand der Laufzeit des elektrischen Antriebs 110 des Kältemittelverdichters 109 bestimmt. Dadurch wird die maximale Kühlwirkung mit der maximalen, zweiten Drehzahl 141 erst zu Beginn des dritten Zeitraums 143 erreicht. Somit wird für die Kühlung des Kältegeräteinnenraums 105 in dem in Figur 3 dargestellten Prozess ein Gesamtzeitraum 145 benötigt, welcher der Summe des ersten, zweiten und dritten Zeitraums 135, 139, 143 entspricht. Nach einem starken Temperaturanstieg in dem Kältegeräteinnenraum 105 wird somit ein relativ langer Gesamtzeitraum 145 benötigt, bis die Temperatur in dem Kältegeräteinnenraum 105 wieder dem Temperaturschwellwert 128 entspricht, da die Aktivierung des elektrischen Antriebs 110 des Kältemittelverdichters 109 durch die Laufzeit des elektrischen Antriebs 110 bestimmt wird.

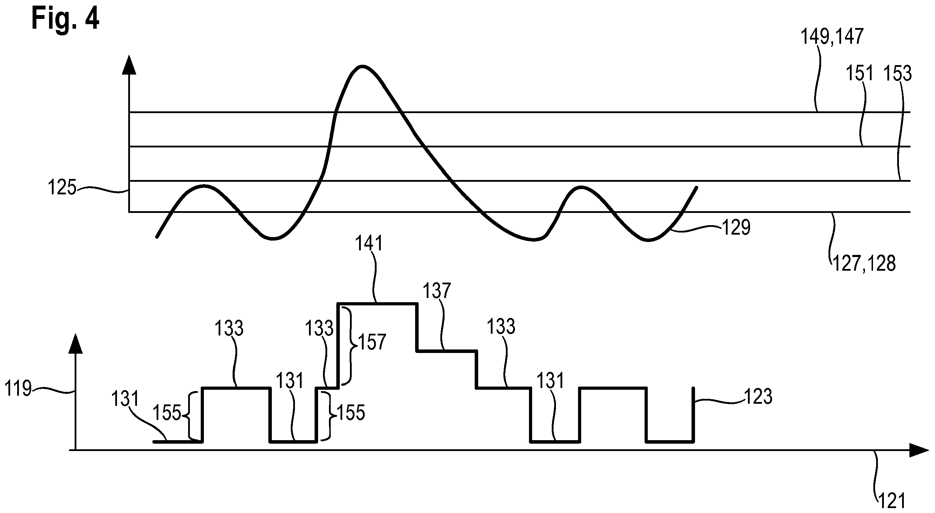

Fig. 4 zeigt eine schematische Darstellung eines temperaturabhängigen Steuerprozesses eines Kältemittelverdichters nach der vorliegenden Erfindung. Die Darstellung der Kurven in dem ersten und zweiten Koordinatensystem ist analog zu der Darstellung der Kurven in Fig. 3. In dem ersten Koordinatensystem in Fig. 4 zeigt die Kurve 123 die Drehzahl des elektrischen Antriebs 110 des Kältemittelverdichters 109 (Erste Ordinatenachse 119) in Abhängigkeit von der Zeit (Erste Abszissenachse 121). Das zweite Koordinatensystem in Fig. 4, welches mit dem ersten Koordinatensystem korreliert ist, zeigt eine Temperaturkurve 129 der von einem Temperatursensor 115 erfassten Temperatur in dem Kältegeräteinnenraum 105 (Zweite Ordinatenachse 125) in Abhängigkeit von der Zeit (Zweite Abszissenachse 127). Entlang der zweiten Abszissenachse 127 wird ein konstanter Temperaturschwellwert 128 angegeben. Entlang der dritten Abszissenachse 147 wird ein konstanter weiterer Temperaturschwellwert 149 angegeben. Entlang der vierten und fünften Abszissenachse 149, 151 wird jeweils ein konstanter Anteil des weiteren Temperaturschwellwerts 149 angegeben.

In dem in Fig. 4 dargestellten Steuerprozess erfasst der Temperatursensor 115 des Kältegeräts 100 eine Temperatur in dem Kältegeräteinnenraum 105. Die Steuerung 111 vergleicht die erfasste Temperatur mit dem Temperaturschwellwert 128.

Nach Inbetriebnahme des Kältemittelverdichters 109 betreibt die Steuerung 111 den elektrischen Antrieb 110 mit einer geringen initialen Drehzahl 131, insbesondere zwischen 2000 und 2100 Umdrehungen pro Minute, wenn die Temperatur in dem Kältegeräteinnenraum 105 unter dem Temperaturschwellwert 128 liegt. Sobald die Temperatur jedoch über den Temperaturschwellwert 128 steigt, erhöht die Steuerung 111 die aktuelle Drehzahl des elektrischen Antriebs 110 um einen vorbestimmten Drehzahlwert 155, welcher insbesondere zwischen 300 Umdrehungen pro Minute und 600 Umdrehungen pro Minute, insbesondere etwa 450 Umdrehungen pro Minute beträgt, um eine erste Drehzahl 133 zu erreichen, welche insbesondere zwischen 2500 Umdrehungen pro Minute und 2600 Umdrehungen pro Minute, insbesondere etwa 2520 Umdrehungen pro Minute, beträgt. Sinkt die Temperatur anschließend wieder unter den Temperaturschwellwert 128 ab, so betreibt die Steuerung 111 den elektrischen Antrieb 110 wieder mit der initialen Drehzahl 131.

Wenn die durch den Temperatursensor 115 in dem Kältegeräteinnenraum 105 erfasste Temperatur jedoch so stark ansteigt, dass diese nicht nur den Temperaturschwellwert 128, sondern auch den weiteren Temperaturschwellwert 149 übersteigt, dann erhöht die Steuerung 111 die aktuelle Drehzahl des elektrischen Antriebs 110 nicht nur um den vorbestimmten Drehzahlwert 155 auf die erste Drehzahl 133, sondern darüber hinaus um einen vorbestimmten weiteren Drehzahlwert 157, welcher insbesondere zwischen 1200 Umdrehungen pro Minute und 1800 Umdrehungen pro Minute, insbesondere etwa 1450 Umdrehungen pro Minute beträgt, um eine maximale, zweite Drehzahl 141 zu erreichen, wobei die zweite Drehzahl 141 insbesondere zwischen 3800 Umdrehungen pro Minute und 4200 Umdrehungen pro Minute, insbesondere etwa 4000 Umdrehungen pro Minute, beträgt.

Ein solch starker Temperaturanstieg kann beispielsweise durch das Öffnen der Kältegerätetür 101 durch den Nutzer verursacht werden. Durch die rasche Erhöhung der aktuellen Drehzahl des elektrischen Antriebs 110 auf die zweite Drehzahl 141 durch die Steuerung 111 kommt es zu einer besonders wirksamen Kühlung innerhalb einer kurzen Zeitspanne.

Anschließend erniedrigt die Steuerung 111 die aktuelle Drehzahl des elektrischen Antriebs 110 von der zweiten Drehzahl 141 auf eine Zwischendrehzahl 137, wenn die durch den Temperatursensor 115 erfasste Temperatur geringer als der weitere Temperaturschwellwert 149, bzw. geringer als ein Anteil des weiteren Temperaturschwellwerts 149 ist, die erfasste Temperatur jedoch weiterhin höher als der Temperaturschwellwert 128 ist. Die Steuerung 111 reduziert die aktuelle Drehzahl des elektrischen Antriebs 110 von der Zwischendrehzahl 137 auf die erste Drehzahl 133, wenn die erfasste Temperatur geringer als ein weiterer Anteil des weiteren Temperaturschwellwerts 149 ist, die Temperatur jedoch weiterhin höher als der Temperaturschwellwert 128 ist. Durch die stufenweise Erniedrigung der zweiten Drehzahl 141 auf die erste Drehzahl 133 des elektrischen Antriebs 110 wird eine kontinuierliche, langsame Erniedrigung der aktuellen Drehzahl des elektrischen Antriebs 110 erreicht. Dadurch wird verhindert, dass bei einer zu starken Erniedrigung der Drehzahl des elektrischen Antriebs 110 und einem daraus resultierenden erneuten Temperaturanstieg die aktuelle Drehzahl des elektrischen Antriebs 110 wieder erhöht werden muss. Beispielsweise kann die Erniedrigung der Drehzahl des elektrischen Antriebs 110 eine Vielzahl von Zwischendrehzahlen 137 umfassen.

In Abhängigkeit davon, ob die durch den Temperatursensor 115 erfasste Temperatur in dem Kältegeräteinnenraum 105 über oder unter dem Temperaturschwellwert 128, bzw. dem weiteren Temperaturschwellwert 149 liegt, betreibt die Steuerung 111 den elektrischen Antrieb 110 des Kältemittelverdichters 109 mit der ersten, normalen Drehzahl 133 oder mit der maximalen, zweiten Drehzahl 141. Wenn der Nutzer die Kältegerätetür 101 öffnet und die Temperatur im Kältegeräteinnenraum 105 daraufhin stark ansteigt und den weiteren Temperaturschwellwert 149 überschreitet wird der elektrische Antrieb 110 mit der maximalen, zweiten Drehzahl 141 betrieben. Dadurch wird erreicht, dass der Steuerprozess durch die Steuerung 111 des elektrischen Antriebs 110 in Abhängigkeit von der erfassten Temperatur in dem Kältegeräteinnenraum 105 erreicht wird und nicht anhand der Laufzeit des elektrischen Antriebs 110. Dadurch kann eine wirksame Kühlung des Kältegeräteinnenraums 105 innerhalb einer kurzen Zeitspanne ermöglicht werden, da die maximale Kühlwirkung des Kältemittelverdichters 109 zeitnah erreicht wird.

Ein solch starker Kühleffekt ist insbesondere in Ländern mit hohen Außentemperaturen, insbesondere tropischen Temperaturen, nützlich, um zu verhindern, dass nach einem längeren Öffnen der Kältegerätetür 101 die Temperatur in dem Kältegeräteinnenraum 105 zu hohe Werte erreicht. Dadurch wird erreicht, dass z.B. neu eingebrachtes Kühlgut schneller auf eine vorteilhafte Kühltemperatur gebracht werden kann und das Kühlgut deshalb besser gelagert werden kann und weniger schnell verdirbt.

Die Vorteile der Erfindung liegen darin, dass der Kältemittelverdichter 109 flexibel betrieben werden kann. Wenn die Temperatur in dem Kältegeräteinnenraum 105 den Temperaturschwellwert 128 unterschreitet, dann kann das Kältegerät 100 zudem in einem Energiesparmodus betrieben werden, wobei der elektrische Antrieb 110 mit einer initialen Drehzahl 131 betrieben wird und geringe Geräusche verursacht.

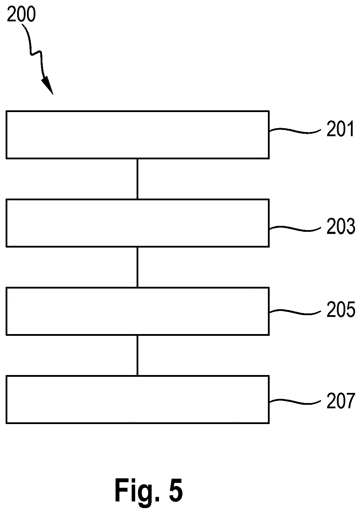

Fig. 5 zeigt einen Ablauf eines Verfahrens 200 zum Betreiben eines Kältegeräts 100, der nicht ein Teil der vorliegenden Erfindung ist.

Das Verfahren 200 umfasst die folgenden Schritte, Erfassen 201 einer Temperatur in dem Kältegeräteinnenraum 105 durch den Temperatursensor 115, Vergleichen 203 der erfassten Temperatur mit einem Temperaturschwellwert 128, Erhöhen 205 der aktuellen Drehzahl des elektrischen Antriebs 110 um einen vorbestimmten Drehzahlwert 155 bei Überschreiten des Temperaturschwellwerts 128 durch die erfasste Temperatur, und/oder Erniedrigen 207 der aktuellen Drehzahl des elektrischen Antriebs 110 um einen vorbestimmten Drehzahlwert 155 bei Unterschreiten des Temperaturschwellwerts 128 durch die erfasste Temperatur.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Kältegerät
- 101: Kältegerätetür
- 103: Kältegeräterahmen
- 105: Kältegeräteinnenraum
- 107: Kältemittelkreislauf
- 109: Kältemittelverdichter
- 110: Elektrischer Antrieb
- 111: Steuerung
- 113: Steuerungsverbindung
- 115: Temperatursensor
- 117: Temperaturverbindung
- 119: Erste Ordinatenachse
- 121: Erste Abszissenachse
- 123: Kurve
- 125: Zweite Ordinatenachse
- 127: Zweite Abszissenachse
- 128: Temperaturschwellwert
- 129: Temperaturkurve
- 131: Initiale Drehzahl
- 133: Erste Drehzahl
- 135: Erster Zeitraum
- 137: Zwischendrehzahl
- 139: Zweiter Zeitraum
- 141: Zweite Drehzahl
- 143: Dritter Zeitraum
- 145: Gesamtzeitraum
- 147: Dritte Abszissenachse
- 149: Weiterer Temperaturschwellwert
- 151: Vierte Abszissenachse
- 153: Fünfte Abszissenachse
- 155: Vorbestimmter Drehzahlwert
- 157: Vorbestimmter weiterer Drehzahlwert
- 200: Verfahren
- 201: Erster Verfahrensschritt: Erfassen der Temperatur
- 203: Zweiter Verfahrensschritt: Vergleichen der Temperatur mit Temperaturschwellwert
- 205: Dritter Verfahrensschritt: Erhöhen der Drehzahl
- 207: Vierter Verfahrensschritt: Erniedrigen der Drehzahl

## Patentansprüche

1. Kältegerät (100) mit einem Kältegeräteinnenraum (105), einem Temperatursensor (115) zum Erfassen einer Temperatur in dem Kältegeräteinnenraum (105), einem Kältemittelverdichter (109) mit einem elektrischen Antrieb (110), sowie einer Steuerung (111) zum Steuern einer Drehzahl des elektrischen Antriebs (110), wobei die Steuerung (111) ausgebildet ist, bei Überschreiten eines ersten Temperaturschwellwerts (128) durch die erfasste Temperatur eine aktuelle Drehzahl des elektrischen Antriebs (110) um einen vorbestimmten ersten Drehzahlwert (155) zu erhöhen, und bei Unterschreiten des ersten Temperaturschwellwerts (128) durch die erfasste Temperatur die aktuelle Drehzahl des elektrischen Antriebs (110) um einen vorbestimmten ersten (155) Drehzahlwert zu erniedrigen, **dadurch gekennzeichnet, dass** die Steuerung (111) ausgebildet ist, bei Überschreiten eines weiteren Temperaturschwellwertes (149) durch die erfasste Temperatur die aktuelle Drehzahl des elektrischen Antriebs (110) um einen vorbestimmten weiteren Drehzahlwert (157) darüber hinaus zusätzlich zu dem vorbestimmten ersten Drehzahlwert (155) zu erhöhen, wobei der weitere Temperaturschwellwert (149) größer als der erste Temperaturschwellwert (128) ist, und wobei der vorbestimmte weitere Drehzahlwert (157) größer als der vorbestimmte erste Drehzahlwert (155) ist.

2. Kältegerät (100) nach Anspruch 1, **dadurch gekennzeichnet, dass** die Steuerung (111) ausgebildet ist, die erfasste Temperatur mit dem Temperaturschwellwert (128) zu vergleichen, um das Überschreiten oder Unterschreiten des Temperaturschwellwertes (128) durch die erfasste Temperatur zu erfassen.

3. Kältegerät (100) nach einem der vorangehenden Ansprüche, **dadurch gekennzeichnet, dass** die Steuerung (111) ausgebildet ist, die aktuelle Drehzahl des elektrischen Antriebs (110) stufenweise zu erhöhen oder zu erniedrigen.

4. Kältegerät (100) nach einem der vorangehenden Ansprüche, **dadurch gekennzeichnet, dass** die Steuerung (111) ausgebildet ist, bei Erreichen einer Nominaldrehzahl des elektrischen Antriebs (110) des Kältemittelverdichters (109) die Drehzahl des elektrischen Antriebs (110) konstant zu halten.

5. Kältegerät (100) nach einem der vorangehenden Ansprüche, **dadurch gekennzeichnet, dass** der vorbestimmte erste Drehzahlwert (155) zwischen 300 Umdrehungen pro Minute und 600 Umdrehungen pro Minute, insbesondere etwa 450 Umdrehungen pro Minute beträgt oder der vorbestimmte weitere Drehzahlwert (157) zwischen 1200 Umdrehungen pro Minute und 1800 Umdrehungen pro Minute, insbesondere etwa 1450 Umdrehungen pro Minute, beträgt.

6. Kältegerät (100) nach einem der vorangehenden Ansprüche, **dadurch gekennzeichnet, dass** die Steuerung (111) ausgebildet ist, bei einer Inbetriebnahme des Kältemittelverdichters (109) die Drehzahl des elektrischen Antriebs (110) kontinuierlich auf eine initiale Drehzahl (131) zu erhöhen.

7. Kältegerät (100) nach einem der vorangehenden Ansprüche, **dadurch gekennzeichnet, dass** die Steuerung (111) ausgebildet ist, nach dem Erhöhen der aktuellen Drehzahl des elektrischen Antriebs (110) um den jeweiligen vorbestimmten Drehzahlwert (155, 157) die anschließend erhaltene Drehzahl als eine aktuelle Drehzahl in einem Speicher zu speichern.

8. Kältegerät (100) nach einem der vorangehenden Ansprüche, **dadurch gekennzeichnet, dass** das Kältegerät (100) eine Eingabeeinrichtung zur Eingabe des jeweiligen Temperaturschwellwerts (128, 149) umfasst.

9. Kältegerät (100) nach einem der vorangehenden Ansprüche, **dadurch gekennzeichnet, dass** das Kältegerät (100) einen Speicher zur Bereitstellung des jeweiligen Temperaturschwellwerts (128, 149) oder eine Kommunikationsschnittstelle zum Abrufen des jeweiligen Temperaturschwellwerts (128, 149) über ein Kommunikationsnetzwerk aufweist.

10. Kältegerät (100) nach Anspruch 9, **dadurch gekennzeichnet, dass** das Kommunikationsnetzwerk eines der folgenden Kommunikationsnetzwerke ist: GSM-Kommunikationsnetzwerk, UMTS-Kommunikationsnetzwerk, Wireless-LAN-Kommunikationsnetzwerk, Bluetooth-Kommunikationsnetzwerk oder Ethernet-Kommunikationsnetzwerk.

11. Verfahren (200) zum Betreiben des Kältegerätes (100) nach Anspruch 1, wobei das Kältegerät (100) einen Kältegeräteinnenraum (105), einen Temperatursensor (115) zum Erfassen einer Temperatur in dem Kältegeräteinnenraum (105), einen Kältemittelverdichter (109) mit einem elektrischen Antrieb (110), sowie eine Steuerung (111) zum Steuern einer Drehzahl des elektrischen Antriebs 110 () umfasst, wobei das Verfahren (200) die folgenden Schritte umfasst,
Erfassen (201) einer Temperatur in dem Kältegeräteinnenraum (105) durch den Temperatursensor (115);
Vergleichen (203) der erfassten Temperatur mit einem ersten Temperaturschwellwert (128);
Erhöhen (205) der aktuellen Drehzahl des elektrischen Antriebs (110) um einen vorbestimmten ersten Drehzahlwert (155) bei Überschreiten des ersten Temperaturschwellwerts (128) durch die erfasste Temperatur, und Erniedrigen (207) der aktuellen Drehzahl des elektrischen Antriebs (110) um einen vorbestimmten ersten Drehzahlwert (155) bei Unterschreiten des Temperaturschwellwerts (128) durch die erfasste Temperatur; und **gekennzeichnet durch** das Erhöhen der aktuellen Drehzahl des elektrischen Antriebs (110) um einen vorbestimmten weiteren Drehzahlwert (157) darüber hinaus zusätzlich zu dem vorbestimmten ersten Drehzahlwert (155) bei Überschreiten eines weiteren Temperaturschwellwerts (149) durch die erfasste Temperatur, wobei der weitere Temperaturschwellwert (149) größer als der erste Temperaturschwellwert (128) ist, und wobei der vorbestimmte weitere Drehzahlwert (157) größer als der vorbestimmte erste Drehzahlwert (155) ist.

## Claims

1. Refrigeration appliance (100) with a refrigeration appliance interior (105), a temperature sensor (115) for detecting a temperature in the refrigeration appliance interior (105), a refrigerant compressor (109) with an electric drive (110), and a controller (111) for controlling a speed of the electric drive (110), wherein the controller (111) is embodied to increase a current speed of the electric drive (110) by a predetermined first speed value (155) when a first temperature threshold value (128) is exceeded by the detected temperature, and to reduce the current speed of the electric drive (110) by a predetermined first speed value (155) when the first temperature threshold value (128) is not met by the detected temperature,
**characterised in that** the controller (111) is embodied to increase the current speed of the electric drive (110) by a predetermined further speed value (157), furthermore in addition to the predetermined first speed value (155), when a further temperature threshold value (149) is exceeded by the detected temperature, wherein the further temperature threshold value (149) is greater than the first temperature threshold value (128), and wherein the predetermined further speed value (157) is greater than the predetermined first speed value (155).

2. Refrigeration appliance (100) according to claim 1, **characterised in that** the controller (111) is embodied to compare the detected temperature with the temperature threshold value (128), in order to detect whether the temperature threshold value (128) is exceeded or not met by the detected temperature.

3. Refrigeration appliance (100) according to one of the preceding claims, **characterised in that** the controller (111) is embodied to increase or reduce the current speed of the electric drive (110) gradually.

4. Refrigeration appliance (100) according to one of the preceding claims, **characterised in that** the controller (111) is embodied to keep the speed of the electric drive (110) constant when a nominal speed of the electric drive (110) of the refrigerant compressor (109) is reached.

5. Refrigeration appliance (100) according to one of the preceding claims, **characterised in that** the predetermined first speed (155) amounts to between 300 revolutions per minute and 600 revolutions per minute, in particular approximately 450 revolutions per minute or the predetermined further speed value (157) amounts to between 1200 revolutions per minute and 1800 revolutions per minute, in particular approximately 1450 revolutions per minute.

6. Refrigeration appliance (100) according to one of the preceding claims, **characterised in that** the controller (111) is embodied to continuously increase the speed of the electric drive (110) to an initial speed (131) when the refrigerant compressor (109) is commissioned.

7. Refrigeration appliance (100) according to one of the preceding claims, **characterised in that** the controller (111) is embodied to store the subsequently maintained speed as a current speed in a memory after the current speed of the electric drive (110) has been increased by the respective predetermined speed value (155, 157).

8. Refrigeration appliance (100) according to one of the preceding claims, **characterised in that** the refrigeration appliance (100) comprises an input device for inputting the respective temperature threshold value (128, 149).

9. Refrigeration appliance (100) according to one of the preceding claims, **characterised in that** the refrigeration appliance (100) has a memory for providing the respective temperature threshold value (128, 149) or a communication interface for recalling the respective temperature threshold value (128, 149) by way of a communication network.

10. Refrigeration appliance (100) according to claim 9, **characterised in that** the communication network is one of the following communication networks: GSM communication network, UMTS communication network, Wireless LAN communication network, Bluetooth communication network or Ethernet communication network.

11. Method (200) for operating the refrigeration appliance (100) according to claim 1, wherein the refrigeration appliance (100) comprises a refrigeration appliance interior (105), a temperature sensor (115) for detecting a temperature in the refrigeration appliance interior (105), a refrigerant compressor (109) with an electric drive (110) and a controller (111) for controlling a speed of the electric drive (110), wherein the method (200) comprises the following steps:
Detecting (201) a temperature in the refrigeration appliance interior (105) by means of the temperature sensor (115);
Comparing (203) the detected temperature with a first temperature threshold value (128);
Increasing (205) the current speed of the electric drive (110) by a predetermined first speed value (155) when the first temperature threshold value (128) is exceed by the detected temperature; and
Reducing (207) the current speed of the electric drive (110) by a predetermined first speed value (155) when the temperature threshold value (128) is not met by the detected temperature; and **characterised by**
Increasing the current speed of the electric drive (110) by a predetermined further speed value (157), furthermore in addition to the predetermined first speed value (155), when a further temperature threshold value (149) is exceeded by the detected temperature, wherein the further temperature threshold value (149) is greater than the first temperature threshold value (128), and wherein the predetermined further speed value (157) is greater than the predetermined first speed value (155).

## Revendications

1. Appareil frigorifique (100) comprenant un espace intérieur (105) d'appareil frigorifique, un capteur de température (115) destiné à détecter une température dans l'espace intérieur (105) d'appareil frigorifique, un compresseur frigorifique (109) comprenant un entraînement électrique (110), ainsi qu'une commande (111) destinée à commander une vitesse de rotation de l'entraînement électrique (110), dans lequel
la commande (111) est réalisée, lors du dépassement d'une première valeur seuil de température (128) en raison de la température détectée, pour augmenter une vitesse de rotation actuelle de l'entrainement électrique (110) d'une première valeur de vitesse de rotation (155) prédéterminée, et, lors du dépassement vers le bas de la première valeur seuil de température (128) en raison de la température détectée, pour baisser la vitesse de rotation actuelle de l'entraînement électrique (110) d'une première valeur de vitesse de rotation (155) prédéterminée,
**caractérisé en ce que**
la commande (111) est réalisée, lors du dépassement d'une valeur seuil de température (149) supplémentaire en raison de la température détectée, pour augmenter la vitesse de rotation actuelle de l'entrainement électrique (110) d'une valeur de vitesse de rotation (157) supplémentaire prédéterminée, en plus de la première valeur de vitesse de rotation (155) prédéterminée, la valeur seuil de température (149) supplémentaire étant supérieure à la première valeur seuil de température (128), et la valeur de vitesse de rotation (157) supplémentaire prédéterminée étant supérieure à la première valeur de vitesse de rotation (155) prédéterminée.

2. Appareil frigorifique (100) selon la revendication 1, **caractérisé en ce que** la commande (111) est réalisée pour comparer la température détectée avec la valeur seuil de température (128) afin de détecter le dépassement vers le haut ou le dépassement vers le bas de la valeur seuil de température (128) en raison de la température détectée.

3. Appareil frigorifique (100) selon l'une quelconque des revendications précédentes, **caractérisé en ce que** la commande (111) est réalisée pour augmenter ou baisser progressivement la vitesse de rotation actuelle de l'entraînement électrique (110).

4. Appareil frigorifique (100) selon l'une quelconque des revendications précédentes, **caractérisé en ce que** la commande (111) est réalisée pour maintenir constante la vitesse de rotation de l'entraînement électrique (110) lorsqu'une vitesse de rotation nominale de l'entraînement électrique (110) du compresseur frigorifique (109) est atteinte.

5. Appareil frigorifique (100) selon l'une quelconque des revendications précédentes, **caractérisé en ce que** la première valeur de vitesse de rotation (155) prédéterminée est comprise entre 300 rotations par minute et 600 rotations par minute, notamment **en ce qu'**elle est d'environ 450 rotations par minute, ou **en ce que** la valeur de vitesse de rotation (157) supplémentaire prédéterminée est comprise entre 1200 rotations par minute et 1800 rotations par minute, notamment **en ce qu'**elle est d'environ 1450 rotations par minute.

6. Appareil frigorifique (100) selon l'une quelconque des revendications précédentes, **caractérisé en ce que** la commande (111) est réalisée, lors d'une mise en service du compresseur frigorifique (109), pour augmenter la vitesse de rotation de l'entraînement électrique (110) continuellement à une vitesse de rotation (131) initiale.

7. Appareil frigorifique (100) selon l'une quelconque des revendications précédentes, **caractérisé en ce que** la commande (111) est réalisée, après l'augmentation de la vitesse de rotation actuelle de l'entraînement électrique (110) de la valeur de vitesse de rotation (155, 157) respective prédéterminée, pour mémoriser dans une mémoire la vitesse de rotation obtenue après cela en tant qu'une vitesse de rotation actuelle.

8. Appareil frigorifique (100) selon l'une quelconque des revendications précédentes, **caractérisé en ce que** l'appareil frigorifique (100) comprend un dispositif d'entrée destiné à entrer la valeur seuil de température (128, 149) respective.

9. Appareil frigorifique (100) selon l'une quelconque des revendications précédentes, **caractérisé en ce que** l'appareil frigorifique (100) comprend une mémoire destinée à fournir la valeur seuil de température (128, 149) respective, ou une interface de communication destinée à appeler la valeur seuil de température (128, 149) respective par l'intermédiaire d'un réseau de communication.

10. Appareil frigorifique (100) selon la revendication 9, **caractérisé en ce que** le réseau de communication est l'un des réseaux de communication suivants : réseau de communication GSM, réseau de communication UMTS, réseau de communication LAN sans fil, réseau de communication Bluetooth ou réseau de communication Ethernet.

11. Procédé (200) de fonctionnement de l'appareil frigorifique (100) selon la revendication 1, dans lequel l'appareil frigorifique (100) comprend un espace intérieur (105) d'appareil frigorifique, un capteur de température (115) destiné à détecter une température dans l'espace intérieur (105) d'appareil frigorifique, un compresseur frigorifique (109) comprenant un entraînement électrique (110), ainsi qu'une commande (111) destinée à commander une vitesse de rotation de l'entraînement électrique (110), le procédé (200) comprenant les étapes suivantes,
détection (201) d'une température dans l'espace intérieur (105) d'appareil frigorifique au moyen du capteur de température (115) ;
comparaison (203) de la température détectée avec une première valeur seuil de température (128) ;
augmentation (205) de la vitesse de rotation actuelle de l'entraînement électrique (110) d'une première valeur de vitesse de rotation (155) prédéterminée lors d'un dépassement de la première valeur seuil de température (128) en raison de la température détectée, et
baisse (207) de la vitesse de rotation actuelle de l'entraînement électrique (110) d'une première valeur de vitesse de rotation (155) prédéterminée lors du dépassement vers le bas de la valeur seuil de température (128) en raison de la température détectée, **caractérisé par**
l'augmentation de la vitesse de rotation actuelle de l'entraînement électrique (110) d'une valeur de vitesse de rotation (157) supplémentaire prédéterminée, en plus de la première valeur de vitesse de rotation (155) prédéterminée, lors du dépassement d'une valeur seuil de température (149) supplémentaire en raison de la température détectée, la valeur seuil de température (149) supplémentaire étant supérieure à la première valeur seuil de température (128), et la valeur de vitesse de rotation (157) supplémentaire prédéterminée étant supérieure à la première valeur de vitesse de rotation (155) prédéterminée.
